# EUROPEAN PATENT APPLICATION

(11) **EP 3 822 173 A1**
(43) Date of publication of application: **19.05.2021**
(21) Application number: 20201662.2
(22) Date of filing: 14.10.2020
(51) Int. Cl.: B64D 33/08, B64D 41/00

(54) **AIRCRAFT POWER GENERATION SYSTEM**

(30) Priority: 14.11.2019 GB 201916566
(71) Applicant: Rolls-Royce plc, London N1 9FX (GB)
(72) Inventor: Bruce, Graham, Derby, Derbyshire DE24 8BJ (GB)
(74) Representative: Rolls-Royce plc

(57) **Abstract**

An aircraft power generation system having an electrical power generator configured to be driven by a gas turbine engine of the aircraft is provided. The electrical power generator is further configured to be electrically coupled to one or more electrical loads of the aircraft, the electrical power generator being cooled by a coolant sub-system. The cooling performance of the coolant sub-system is affected by the operation of the gas turbine engine. The aircraft power generation system further has a control sub-system configured to dynamically control the electrical output power capability of the generator in accordance with the cooling performance of the coolant sub-system

## Description

### Field of the disclosure

The present disclosure relates to an aircraft power generation system having an electrical power generator.

### Background

Aircraft gas turbine engines conventionally have an auxiliary gearbox that receives mechanical drive from the engine to run one or more electrical power generators, as well as other engine accessories (such as pumps for hydraulic fluid, fuel and oil). Such generators are typically the primary source of electrical power on the aircraft. There is a growing demand for electrical power as aircraft functions become more electrified and less reliant on hydraulic and pneumatic circuits.

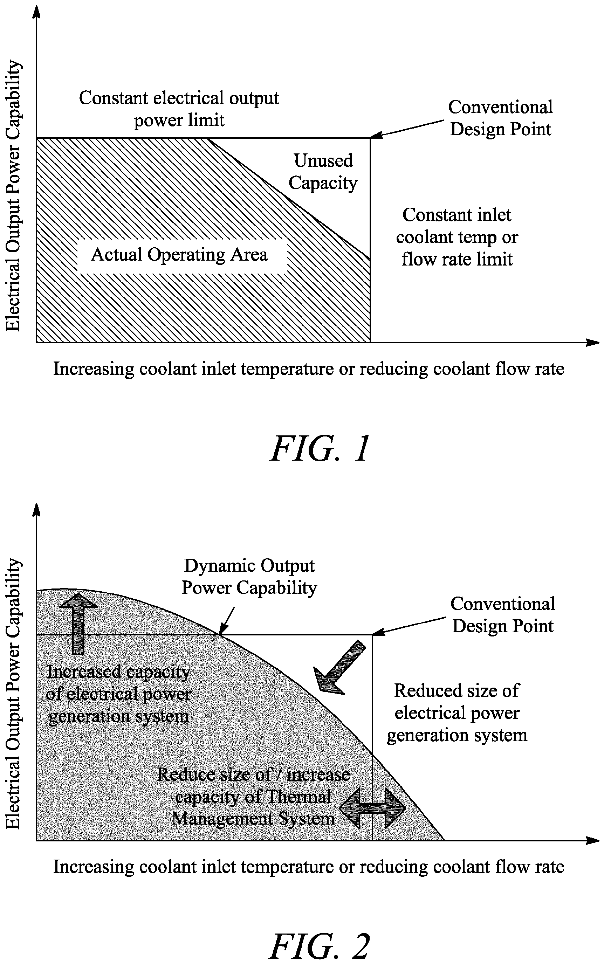

Aircraft electrical power generators have to be cooled. Convenient sources of coolant fluid are: the fuel pumped from the aircraft's tank(s) for burning in the engine combustor, and the oil of the engine's oil system. However, the operating condition of the engine can affect the performance of these coolants. For example, high ambient temperatures at take-off can increase fuel temperatures, or reductions in thrust demand (e.g. when transitioning from climb to cruise) can significantly reduce fuel flow rates. Conventional electrical power generators are configured according to a worst case scenario i.e. to deliver highest electrical power demand at the least favourable operating condition. This is indicated by the arrowed design point in the schematic diagram of Figure 1, which shows a rectangular area defining combinations of electrical power output and coolant performance metric (in this case coolant inlet temperature or coolant flow rate to the generator) allowed by the system for a given electrical power generator. Key features of the diagram are:
- A constant electrical output power bounding limit is adopted regardless of coolant inlet temperature or flow rate.
- A constant coolant inlet temperature or flow rate bounding limit is adopted regardless of electrical output power requirement.

However, as indicated by the shaded area of the rectangle, the actual operating area of the generator is smaller than the rectangular area, with the worst case scenario design point forming the apex of a region of unused capacity. This means that equipment is designed for conditions that are never met in service; increasing the size, weight, cost, and capacity of the engine thermal management system and the electrical power generator. In addition, away from the worst case scenario design point, equipment may have unlocked potential in which safe operation is possible outside the area of the rectangle of allowed combinations of electrical power output and coolant performance metric.

US 2013/0184901 proposes a vehicle energy management and power management system. More particularly, an Intelligent Adaptive Power System Manager (IAPSM) is responsible for communicating with a Mission Executive (ME) and a Power Management System (PMS) in order to deliver advisory outputs to the ME and instructional outputs to the PMS and a Full Authority Digital Electronic Controller (FADEC), an aim being to control one or more power system components and one or more power producing components according to optimal conditions.

### Summary

In general terms, the present disclosure provides an aircraft electrical power system having an electrical power generator, and a power generator controller which is configured to dynamically control the electrical output power of the generator. The dynamic control can take advantage of operating characteristics, such as electrical load requirements under hot/cold day conditions, of an aircraft to achieve improvements in size, weight, cost, capacity and efficiency of engine thermal management systems and engine electrical power generators.

According to a first aspect there is provided an aircraft power generation system having an electrical power generator driven by a gas turbine engine of the aircraft, and electrically coupled to one or more electrical loads of the aircraft, the electrical power generator being cooled by a coolant sub-system,
wherein the cooling performance of the coolant sub-system is affected by the operation of the gas turbine engine, and wherein the aircraft power generation system further has a control sub-system configured to dynamically control the electrical output power capability of the generator in accordance with the cooling performance of the coolant sub-system.

According to a second aspect there is provided a combination of an aircraft gas turbine engine and the power generation system of the first aspect, the electrical power generator being driven by the gas turbine engine.

According to a third aspect there is provided an aircraft having the combination of the aircraft gas turbine engine and the power generation system of the second aspect, the electrical power generator being electrically coupled to one or more electrical loads of the aircraft.

According to a fourth aspect, there is provided a method of operating an aircraft power generation system having an electrical power generator driven by a gas turbine engine of the aircraft, and electrically coupled to one or more electrical loads of the aircraft, the electrical power generator being cooled by a coolant sub-system;
the method including:
operating the gas turbine engine;
cooling the electrical power generator using a coolant sub-system, the cooling performance of the coolant sub-system being affected by the operation of the gas turbine engine; and
dynamically controlling the electrical output power capability of the generator in accordance with the cooling performance of the coolant sub-system.

Optional features of the present disclosure will now be set out. These are applicable singly or in any combination with any aspect of the present disclosure.

The coolant sub-system typically uses coolant fluid to cool the electrical power generator, the operation of the gas turbine engine affecting the cooling performance of the coolant sub-system by varying a temperature and/or a flow rate of the coolant fluid. For example, the coolant fluid may include a flow of fuel extracted from one or more fuel tanks of the aircraft for burning in a combustor of the gas turbine engine. As another example, the coolant fluid may include a flow of oil which circulates around the gas turbine engine for cooling and lubrication thereof.

The control sub-system may be further configured to vary the operation of the gas turbine engine in accordance with the flight cycle condition of the aircraft to control the cooling performance of the coolant sub-system and thereby control the electrical output power capability of the generator. For example, when the coolant fluid includes a flow of fuel, the operation of the gas turbine engine can be varied by controlling an amount of extracted fuel spilled back to fuel tanks of the aircraft. As another example, when the coolant fluid includes a flow of oil the operation of the gas turbine engine can be varied by controlling a circulation rate of the oil around the gas turbine engine.

The electrical output power capability of the generator may be dynamically controlled by the control sub-system such that the electrical output power capability matches or exceeds a required electrical power demand on the generator from the electrical loads. For example, the control sub-system may vary the operation of the gas turbine to vary the cooling performance of the coolant sub-system, e.g. by varying flow rate of coolant fluid and/or by varying electrical accessory power demand on the engine, and thereby control the electrical output power capability of the generator.

The control sub-system may be further configured to dynamically control the aircraft electrical loads (e.g. by varying engine electrical accessory power demands and/or operating electrical loads at different power qualities) such that the electrical output power capability of the generator matches or exceeds the required electrical power demand on the generator from the electrical loads. The control sub-system may include an aircraft management system which determines control priorities as between controlling the aircraft electrical loads and controlling the electrical output power capability of the generator.

The control sub-system may include an electronic engine controller (e.g. a Full Authority Digital Electronic Controller - FADEC) which controls the gas turbine engine and the electrical power generator. When the control sub-system also includes an aircraft management system, this may communicate the control priorities to the electronic engine controller for implementation by the electronic engine controller. Thus the communicated control priorities can be effected by controlling the operation of the gas turbine engine and/or the generator. Typically also the electronic engine controller controls engine electrical accessories and the coolant sub-system, and the communicated control priorities can also be effected by controlling their operation.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
Figure 1 is a schematic diagram showing a rectangular area defining combinations of electrical power output and coolant performance metric allowed by a conventional electrical power generator for a given electrical power generator;
Figure 2 shows schematically, superimposed on the rectangular area of Figure 1, a shaded area representing combinations of electrical power output and coolant performance metric allowed by an electrical power generator of the present disclosure;
Figure 3 shows schematically relationships between an Engine System, primarily concerned with propulsion and power generation, and an Aircraft System, primarily concerned with aircraft electrical loads;
Figure 4 shows an iterative process which allows the Engine System and its Electrical Power Generation System to adjust to the requirements of an Aircraft Management System, and a required electrical power demand;
Figure 5 shows a variant of the iterative process of Figure 4; and
Figure 6 shows schematically a variant of the Engine and Aircraft Systems of Figure 3 in which the Aircraft System now includes an electric propulsion system and corresponding electric propulsion loads which are imposed on the Electrical Power Generation System.

### Detailed description

Aspects and embodiments of the present disclosure will now be discussed with reference to the accompanying figures. Further aspects and embodiments will be apparent to those skilled in the art.

The present disclosure uses aircraft engine thermal management system information, such as temperature and flow rate of fuel or oil coolant, to dynamically control the engine's electrical power generator, for example by extending or restricting the generator's electrical output power capability limit. Typically this is achieved by combining the thermal management system information with either or both of the flight cycle condition of the aircraft and the electrical power demand of the aircraft. Operational priorities may be implemented to more closely achieve optimal control strategies. In turn, this allows improvements in terms of size, weight, cost, capacity and efficiency of the engine thermal management system, and the electrical power generator. Control of electrical output power capability of the generator may be for more general control purposes, or for safety or protection functions.

This is illustrated in Figure 2, which shows schematically, superimposed on the rectangle of Figure 1, a shaded area representing the combinations of electrical power output and coolant performance metric allowed by an electrical power generator of an aircraft electrical power system of the present disclosure. The system makes it possible to makes changes that enable one or more of: (i) increasing capacity to service electrical loads at lower coolant temperatures / higher coolant flow rates, (ii) reducing the size of the electrical power generator, and (iii) reducing the size of the engine thermal management system or increasing its capacity for a given size.

Output power limiting parameters can be derived from the electrical output power capability of the electrical power generator. An example of an output power limiting parameter for control purposes could be a simple value of a power e.g. in kW or kVA, or a DC bus voltage droop control parameter, coefficient or set point which is used by the electrical power generator to regulate output voltage. An example of an output power limiting parameter for safety or protection purposes might be a simple value of maximum current in Amps, or an i2t curve determining an over-current vs. time profile. This would then specify the amount of time for which the electrical power generator must deliver current into the system under electrical fault conditions, or dictate the amount of time electrical contactors or electrical circuit breakers must wait before isolating an electrical fault.

An Electrical Power Generator (EPG) can consist of the engine's electrical power generator or starter-generator, and a generator control unit. As known from conventional aircraft, the generator or starter-generator can be a wound field synchronous type (usually known as a Variable Frequency Starter Generator (VFSG)), or it can be an integrated drive type (usually known as an Integrated Drive Generator IDG). However, in aircraft that are "more-electric", the EPG may have a Permanent Magnet Starter Generator (PMSG), power conversion (Power Electronics) to facilitate voltage and frequency regulation and starting functions, and energy storage in the form of capacitors (including super-capacitors) and battery-based energy storage systems of different types.

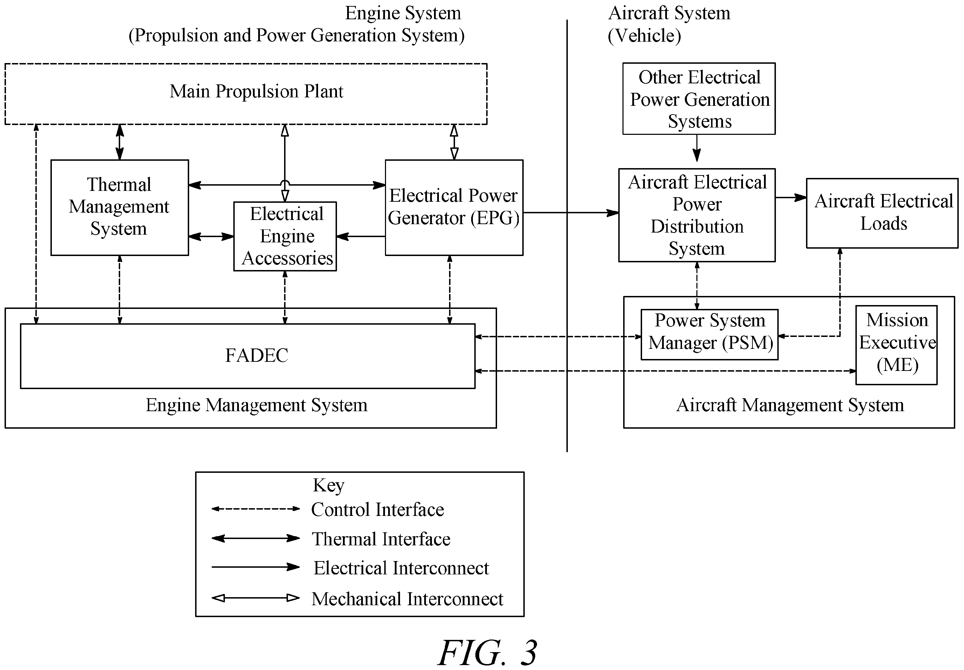

Figure 3 shows schematically, in the context of a "more-electric" aircraft, relationships between an Engine System, primarily concerned with propulsion and power generation, and an Aircraft System, primarily concerned with aircraft electrical loads.

Although it resides in the Engine System, with interfaces to the main propulsion plant (i.e. gas turbine engine) at a Rotating Mechanical Interconnect and at a Thermal Interface, the EPG is typically certified as part of the Aircraft System. Conveniently, an additional control interface may be made from the generator control unit of the EPG to an Electronic Engine Controller (EEC) (for example, as shown in Figure 3, a FADEC), of an Engine Management System. This additional interface allows closed control loop to be implemented, and can provide useful control information, such as internal working temperatures in the EPG. In this way, the FADEC can dynamically determine the electrical output power capability of the EPG.

The FADEC interfaces with a Power System Manager (PSM) and a Mission Executive (ME) or equivalent, the PSM and ME together forming an Aircraft Management System.

The PSM determines the required electrical power demand which the EPG has to meet. The Engine System adapts to meet these requirements and may increase or decrease the electrical output power capability of the EPG. Such an increase or decrease may result in responsive change to other parameters such as engine speed, which are communicated to the ME for further optimisation. The FADEC then communicates the electrical output power capability information to the PSM. Thus the FADEC, the PSM and the ME combine together to form a control sub-system which bridges the Engine System and the Aircraft System and which is configured to dynamically control the electrical output power capability of the EPG.The ME provides flight data including flight cycle condition, sometimes referred to as mission phase, which may include: taxiing, taking-off, climbing, cruising, descending, landing, idling, and/or refuelling. Advantageously, strong correlations generally exist between environmental and flight cycle conditions and electrical power demand. Thus the flight cycle condition information can be used to provide advisory ME limits on the EPG's electrical output power capability. For example, when descending, the FADEC may provide advisory electrical output power capability limits for the EPG to enable the engine to run at flight-idle conditions and reduce fuel burn on descent. However, the Aircraft Management System may decide to prioritise increased electrical output power requirements to accommodate for large electrical anti-icing loads. Thus communication of the EPG's electrical output power capability within the Aircraft System as an advisory output or a hard limit on the Aircraft System allows the Aircraft System to make intelligent decisions about best ways to operate the aircraft.

The coolant provided to the EPG fluctuates according to flight cycle condition (mission phase) and other external parameters such as ambient temperature. The PSM allows knowledge of the electrical power demand, the coolant flow rate and the coolant inlet temperature to dynamically set the EPG's electrical output power capability. Preferably combined with knowledge of the operating profile of the aircraft, this enables optimisation in terms of size, weight, cost, capacity and efficiency of the engine's thermal management system, and the EPG.

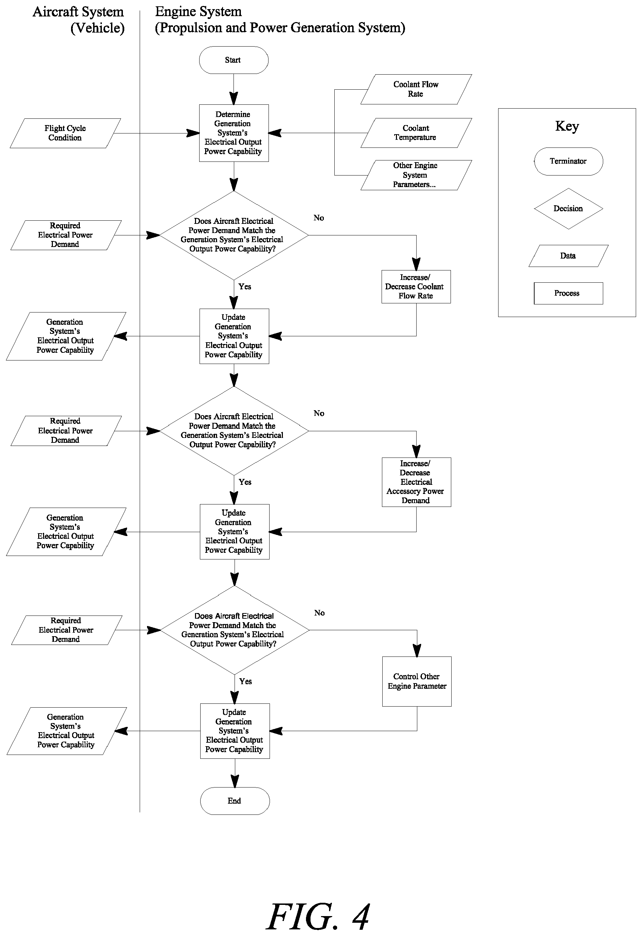

Conventional engines have mechanically driven accessories located on a gearbox driven directly by the engine. As shown in Figure 3, "more-electric" engines may incorporate electrical engine accessories, such as electrically driven pumps to provide variable flow rates of fuel, oil, hydraulic fluid, air etc. to affect operation of the engine. Either way, these fluid systems are linked to the engine's thermal management system, both the fluid systems and the thermal management system being under the control of the FADEC and thus in communication with the PSM. Therefore the engine accessories can conveniently be used to: change the inlet coolant temperature and flow rate provided to the EPG, and change the overall electrical power demand required by the EPG. As mentioned above, these parameters are actively controlled in order to dynamically increase or decrease the electrical output power capability of the EPG.A process (algorithm) is shown in Figure 4. The process is iterative and allows the Engine System to adjust the electrical output power capability of the EPG according to the requirements of the Aircraft Management System.
- Step 1: The Engine System evaluates the electrical output power capability using Aircraft System data and engine data including, but not limited to, flight cycle condition, coolant flow rate and coolant temperature. The Engine System then communicates this to the Aircraft System.
- Step 2: The Engine System receives the required electrical power demand from the Aircraft System. If this does not match or exceed the electrical output power capability, a response is made, which can be an increase or decrease of the coolant flow rate.
- Step 3: The Engine System re-evaluates the electrical output power capability. The Engine System then communicates this to the Aircraft System.
- Step 4: The Engine System receives the required electrical power demand from the Aircraft System. If this does not match or exceed the electrical output power capability a response is made, which can be an increase or decrease of the electrical accessory power demand.
- Step 5: The Engine System re-evaluates the electrical output power capability. The Engine System then communicates this to the Aircraft System.
- Step 6: The Engine System receives the required electrical power demand from the Aircraft System. If this does not match or exceed the electrical output power capability a response is made, which can be an appropriate change to any other parameters that will help meet the required electrical power demand.
- The process then repeats to dynamically manage the electrical output power capability as required.

It is possible to perform the process steps in a different order achieve the same result.

It is also possible to vary the amount of change provided by each response variable to give a more optimal response to the required electrical power demand. A range of different types of control loop can be applied to this process (for example Proportional, Integral and Derivative (PID) control) to reach the desired effect. The type of control loop implemented does not change the primary outcome of ensuring the EPG's electrical output power capability matches or exceeds the required electrical power demand.

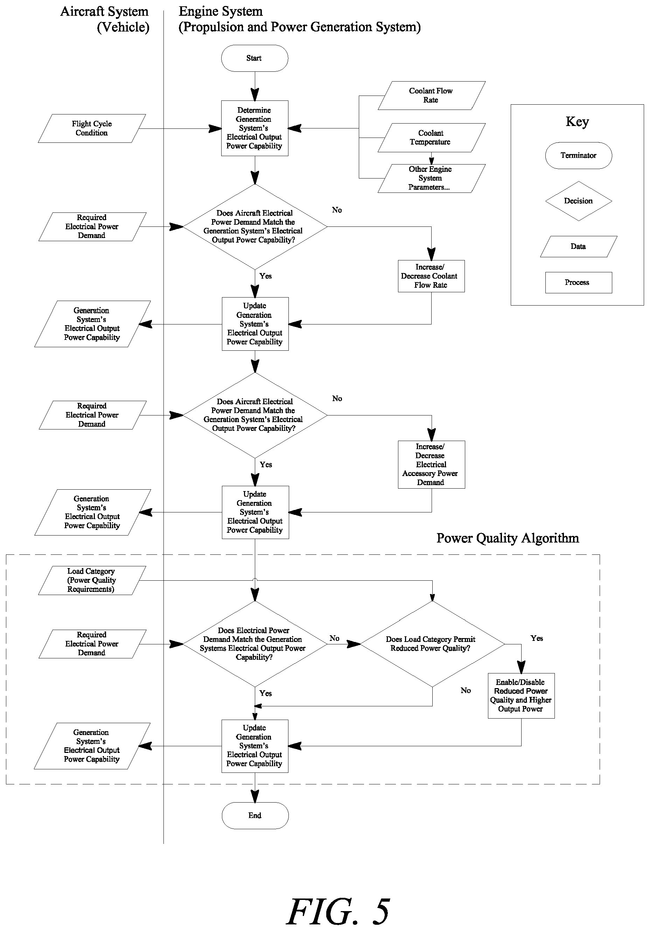

As well as parameters such as coolant temperature and coolant flow rate, other information such as system health data, environmental data, vibration data, and other engine or aircraft parameters may be used in defining the EPG's dynamic electrical output power capability. There may also be parameters internal to the EPG which can be controlled in order to increase or reduce its electrical output power capability. One example is power quality, the electrical output power capability of a power converter (power electronics) being increased by reducing the switching frequency or decreased by increasing the switching frequency. This example as incorporated in the variant process shown in Figure 5, in which Step 6 above is replaced by a power quality algorithm.

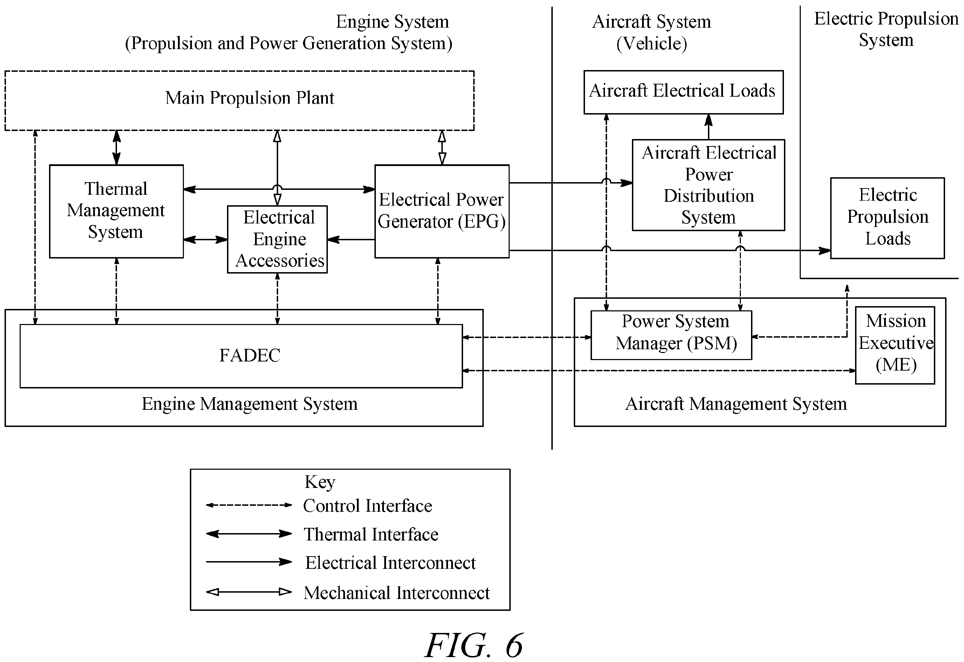

The ability to control the electrical output power capability of the EPG as described above can also be applied to hybrid-electric aircraft systems. Figure 6 shows schematically a variant of the Engine and Aircraft Systems of Figure 3 in which the Aircraft System now includes an electric propulsion system and corresponding electric propulsion loads which are imposed on the EPG.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An aircraft power generation system having an electrical power generator configured to be driven by a gas turbine engine of the aircraft, and further configured to be electrically coupled to one or more electrical loads of the aircraft, the electrical power generator being cooled by a coolant sub-system,
wherein the cooling performance of the coolant sub-system is affected by the operation of the gas turbine engine, and wherein the aircraft power generation system further has a control sub-system configured to dynamically control the electrical output power capability of the generator in accordance with the cooling performance of the coolant sub-system.

2. The power generation system according to claim 1, wherein the coolant sub-system uses coolant fluid to cool the electrical power generator, the operation of the gas turbine engine affecting the cooling performance of the coolant sub-system by varying a temperature and/or a flow rate of the coolant fluid.

3. The power generation system according to claim 2, wherein the coolant fluid includes a flow of fuel extracted from one or more fuel tanks of the aircraft for burning in a combustor of the gas turbine engine.

4. The power generation system according to claim 2 or 3, wherein the coolant fluid includes a flow of oil which circulates around the gas turbine engine for cooling and lubrication thereof.

5. The power generation system according to any one of the previous claims, wherein the control sub-system is further configured to vary the operation of the gas turbine engine in accordance with the flight cycle condition of the aircraft to control the cooling performance of the coolant sub-system and thereby control the electrical output power capability of the generator.

6. The power generation system according to any one of the previous claims, wherein the electrical output power capability of the generator is dynamically controlled by the control sub-system such that the electrical output power capability matches or exceeds a required electrical power demand on the generator from the electrical loads.

7. The power generation system according to any one of the previous claims, wherein the control sub-system is further configured to dynamically control the aircraft electrical loads such that the electrical output power capability of the generator matches or exceeds the required electrical power demand on the generator from the electrical loads.

8. The power generation system according to claim 7, wherein the control sub-system includes an aircraft management system which determines priorities as between controlling the aircraft electrical loads and controlling the electrical output power capability of the generator.

9. The power generation system according to any one of the previous claims, wherein the control sub-system includes an electronic engine controller which controls the gas turbine engine and the electrical power generator.

10. A combination of an aircraft gas turbine engine and the power generation system of any one of the previous claims, the electrical power system being driven by the gas turbine engine.

11. An aircraft having the combination of the aircraft gas turbine engine and the power generation system of claim 10, the electrical power generator being electrically coupled to one or more electrical loads of the aircraft.

12. A method of operating an aircraft power generation system having an electrical power generator driven by a gas turbine engine of the aircraft, and electrically coupled to one or more electrical loads of the aircraft, the electrical power generator being cooled by a coolant sub-system;
the method including:
operating the gas turbine engine;
cooling the electrical power generator using a coolant sub-system, the cooling performance of the coolant sub-system being affected by the operation of the gas turbine engine; and
dynamically controlling the electrical output power capability of the generator in accordance with the cooling performance of the coolant sub-system.

13. The method according to claim 12, wherein the method further includes: varying the operation of the gas turbine engine in accordance with the flight cycle condition of the aircraft to control the cooling performance of the coolant sub-system and thereby control the electrical output power capability of the generator.

14. The method according to claim 12 or 13, wherein the electrical output power capability of the generator is dynamically controlled such that the electrical output power capability matches or exceeds a required electrical power demand on the generator from the electrical loads.

15. The method according to any one of claims 12 to 14, further including: dynamically controlling the aircraft electrical loads such that the electrical output power capability of the generator matches or exceeds the required electrical power demand on the generator from the electrical loads.
